# EUROPEAN PATENT SPECIFICATION

(11) **EP 1 591 458 B1**
(45) Date of publication and mention of the grant of the patent: **20.08.2008**
(21) Application number: 05107223.9
(22) Date of filing: 26.12.2002
(51) Int. Cl.: C08F 8/00, C08L 23/16, C08L 23/10, C08J 3/20

(54) **Thermoplastic Elastomers**
Thermoplastische Elastomere
Elastomères thermoplastiques

(30) Priority: 15.01.2002 US 349099 P
(43) Date of publication of application: 02.11.2005
(62) Divisional of application: 02796151.5
(73) Proprietor: Advanced Elastomer Systems, L.P., Akron, OH 44311-1065 (US)
(72) Inventor: Ellul, Maria D., Silver Lake Village, OH Ohio 44224 (US); Cheng, Jianya, Fairlawn, OH Ohio 44333 (US)
(74) Representative: von Kreisler Selting Werner

(56) References cited:
- EP-A- 0 775 718
- WO-A-01/72894
- US-A- 5 656 693

## Description

### TECHNICAL FIELD

This invention relates to thermoplastic elastomers and the use therof. These thermoplastic elastomers are efficiently produced and exhibit unique properties due to the use of a gas-phase polymerized elastomeric copolymer.

### BACKGROUND OF THE INVENTION

Thermoplastic elastomers are known. They have many of the properties of thermoset elastomers, yet they are processable as thermoplastics. One type of thermoplastic elastomer is a thermoplastic vulcanizate, which may be characterized by finely-divided rubber particles dispersed within a plastic. These rubber particles are crosslinked to promote elasticity. Thermoplastic vulcanizates are conventionally produced by dynamic vulcanization, which is a process whereby a rubber is cured or vulcanized within a blend with at least one non-vulcanizing polymer while the polymers are undergoing mixing or masticating at some elevated temperature, preferably above the melt temperature of the non-vulcanizing polymer.

Many conventionally produced thermoplastic vulcanizates employ an ethylene-propylene-diene terpolymer (EPDM) as the rubber of choice. These terpolymers have typically been synthesized by using solution polymerization techniques. A shortcoming of solution polymerization is the inability to synthesize high molecular weight polymer (*e*.*g*., M_{w} of 500,000 or more) without oil extending the polymer product. The same shortcomings exist when slurry polymerization techniques are used. Because the use of high molecular weight EPDM rubber is desirable in the manufacture of technologically useful thermoplastic vulcanizates, oil extended EPDM is often used. And, as a result, the oil that is employed to extend the EPDM ultimately becomes part of the thermoplastic vulcanizate. The ability to select an oil during manufacture of the thermoplastic vulcanizate is therefore limited. This can be disadvantageous because it is often desirable to tailor the performance characteristics of the thermoplastic vulcanizate with various oils.

Furthermore, conventional solution-polymerization techniques produce rubber bales, and these bales are then pre-processed by granulating the rubber prior to manufacture of the thermoplastic vulcanizate. This additional manufacturing step can be energy intensive, time consuming, costly, and involves additional process complications.

Conventionally produced thermoplastic vulcanizates also typically include carbon black. Although carbon black is typically added to the composition prior to dynamic vulcanization, conventional wisdom suggests that the carbon black becomes primarily incorporated into the plastic matrix of the thermoplastic vulcanizate. As a result, the advantages associated with carbon black, such as the UV stability, are not believed to be fully realized in the rubber phase.

Because the number of uses of thermoplastic vulcanizates is increasing, the performance demands that are placed on these materials is more demanding, and the manufacturing efficiency of the materials is continually pursued, there exists a need to overcome some of the shortcomings associated with the prior art materials and methods of manufacture.

### SUMMARY OF INVENTION

The present invention includes a thermoplastic elastomer composition comprising a thermoplastic elastomer composition comprising:
a blend of a vulcanized elastomeric copolymer and a thermoplastic polymer, where said vulcanized elastomeric copolymer has been obtained by dynamic vulcanization of a gas-phase elastomeric copolymer having a Mooney Viscosity (ML(1 +4@ 125°C)) of 80 to 450, and where the vulcanized elastomeric copolymer and the thermoplastic polymer have carbon black dispersed therein.

Further the present invention relates to the use of an elastomeric copolymer which contains from 10 to 40 parts carbon black per 100 parts rubber, which has a Mooney Viscosity (ML(1+4@ 125°C)) of 80 to 450 and which is obtained by gas-phase polymerization for improving the UV stability, extrusion surface roughness (ESR) and surface spot count of a thermoplastic vulcanizate composition.

The use of gas-phase synthesized elastomeric copolymer, *e*.*g*., ethylene-propylene-diene terpolymer, in thermoplastic vulcanizates has unexpectedly solved many problems that were associated with the use of solution-synthesized elastomeric copolymers. To begin with, gas-phase synthesis can provide high molecular weight copolymers that are granular and not oil extended. As a result, technologically useful thermoplastic vulcanizates can be efficiently produced with an oil of choice. Furthermore, the fact that the gas-phase synthesized elastomeric copolymers are granular thereby provides the ability to eliminate certain processing steps during the manufacture of thermoplastic vulcanizates. And, different levels of oil incorporation can be achieved when certain oils are blended with the granular polymer. Further, the synthesis of gas-phase elastomeric copolymers can employ various inert materials, such as carbon black, as dispersants, and as a result, these inert materials are evenly dispersed throughout the polymer. Advantageously, when gas-phased synthesized elastomeric copolymers having carbon black dispersed therein are employed in the manufacture of thermoplastic vulcanizates, the UV stability provided by the carbon black can, in certain embodiments, advantageously exist in both the rubber and plastic phases of the thermoplastic vulcanizate. Also, it has advantageously been found that the carbon black within the rubber can provide thermoplastic vulcanizates having a technologically useful UV stability without the need for adding additional carbon black during the manufacture of the thermoplastic vulcanizate. Still further, the predispersed carbon black is believed to contribute to better extrusion quality of the thermoplastic vulcanizate.

### PREFERRED EMBODIMENT FOR CARRYING OUT THE INVENTION

The thermoplastic elastomers of this invention include a blend of an elastomeric copolymer and a non-vulcanizing polymer namely a thermoplastic polymer. The preferred elastomeric copolymer is obtained from the polymerization of ethylene, and α-olefin, and optionally a diene monomer by using gas-phase polymerization techniques. The elastomeric copolymers are advantageously granular and preferably have inert material such as carbon black evenly dispersed therein. These copolymers may be referred to as gas-phase elastomeric copolymers.

Gas-phase elastomeric copolymers include polymeric units deriving from ethylene, an α-olefin, and optionally a diene monomer. These monomers are preferably polymerized by using gas-phase polymerization techniques. These techniques are well known in the art as described in U.S. Patent Nos. 5,783,645 and 6,011,128.

The α-olefins may include, but are not limited to, propylene, 1-butene, 1-hexene, 4-methyl-1 pentene, 1-octene, 1-decene, or combinations thereof. The preferred α-olefins are propylene, 1-hexene, 1-octene or combinations thereof.

The diene monomers may include, but are not limited to, 5-ethylidene-2-norborne;1,4-hexadiene; 5-methylene-2-norbornene; 1,6-octadiene; 5-methyl-1,4-hexadiene; 3,7-dimethyl-1,6-octadiene; 1,3-cyclopentadiene; 1,4-cyclohexadiene; dicyclopentadiene; 5-vinyl-2-norbornene, divinyl benzene, and the like, or a combination thereof. The preferred diene monomers are 5-ethylidene-2-norbornene and 5-vinyl-2-norbornene. In the event that the copolymer is prepared from ethylene, α-olefin, and diene monomers, the copolymer may be referred to as a terpolymer or even a tetrapolymer in the event that multiple α-olefins or dienes are used. The preferred elastomeric copolymers include terpolymers of ethylene, propylene, and 5-ethylidene-2-norbornene.

The elastomeric copolymers contain from 20 to 90 mole percent ethylene units deriving from ethylene monomer. Preferably, these copolymers contain from 40 to 85 mole percent, and even more preferably from 50 to 80 mole percent, ethylene units. Furthermore, where the copolymers contain diene units, the diene units can be present in an amount from 0.1 to 5 mole percent, preferably from 0.2 to 4 mole percent, and even more preferably from 1 to 2.5 mole percent. The balance of the copolymer will generally be made up of units deriving from α-olefin monomers. Accordingly, the copolymer may contain from 10 to 80 mole percent, preferably from 15 to 50 mole percent, and more preferably from 20 to 40 mole percent, α-olefin units deriving from α-olefin monomers. The foregoing mole percentages are based upon the total moles of the polymer.

Elastomeric copolymers employed in this invention can be synthesized in a gas-phase fluidized bed reactor, as disclosed in U.S. Patent Nos. 4,379,558, 4,383,095, 4,521,566, 4,876,320, 4,994,534, 5,317,036, 5,453,471, 5,648,442, 6,228,956, and 6,028,140. They can likewise be synthesized in a gas-phase stirred reactor as disclosed in U.S. Patent No. ,256,263. These gas-phase polymerization processes can be conducted in the condensed mode, induced condensed mode, or liquid monomer mode, all of which are known in the art.

The catalyst employed to polymerize the ethylene, α-olefin, and diene monomers into elastomeric copolymers can include both traditional Ziegler-Natta type catalyst systems, especially those including vanadium compounds, as disclosed in U.S. Patent No. 5,783,64, as well as metallocene catalysts, which are also disclosed in U.S. Patent No. 5,793,645. Other catalysts systems such as the Brookhardt catalyst system may also be employed.

Preferably, the elastomeric copolymers are produced in the presence of an inert particulate matter such as carbon black, silica, clay, talc, or the like, as described in U.S. Patent No. 4,994,534. The preferred inert particulate material is carbon black.

The gas-phase elastomeric copolymers preferably have a weight average molecular weight (M_{W}) that is greater than 200,000, more preferably from 300,000 to 1,000,000, even more preferably from 400,000 to 900,000, and still more preferably from 500,000 to 700,000. These copolymers preferably have a number average molecular weight (Mₙ) that is greater than 80,000, more preferably from 100,000 to 350,000, even more preferably from 120,000 to 300,000, and still more preferably from 130,000 to 250,000. Advantageously, the use of gas-phase elastomeric copolymers allows high molecular weight copolymer, as described above, to be employed without oil extension.

Useful gas-phase elastomeric copolymers have a Mooney Viscosity (ML(1+4@125°C)) of from 80 to 450, more preferably from 200 to 400, and even more preferably from 300 to 380, where the Mooney Viscosity is that of the neat polymer.

The gas-phase elastomeric copolymers are advantageously granular. Preferably, the particle size of the granules is from 0.4 to 1.0 mm, more preferably from 0.5 to 0.9 mm, and even more preferably from 0.6 to 0.8 mm.

Because an inert particulate material is employed during the gas-phase synthesis of the elastomeric copolymers, the resulting elastomeric copolymer granules will contain dispersed therein or coated thereon the inert particulate material. In a preferred embodiment, where carbon black is employed as the inert particulate material, the resulting elastomeric copolymer granules will include from 10 to 40 parts by weight carbon black per 100 parts by weight rubber, more preferably from 12 to 30 parts by weight carbon black per 100 parts by weight rubber, and more preferably from 15 to 25 parts by weight carbon black per 100 parts by weight rubber.

The thermoplastic elastomers of this invention may also include conventional elastomeric copolymers. These copolymers are typically solution or slurry polymerized. Examples of these elastomeric copolymers include rubbery copolymers polymerized from ethylene, at least one alphaolefin monomer, and at least one diene monomer, as well as butyl rubber, which refers to a rubbery amorphous copolymer of isobutylene and isoprene or an amorphous terpolymer of isobutylene, isoprene, and a divinyl aromatic monomer. The conventional elastomeric copolymers are normally not in granular form and do not have dispersed therein an inert material as a direct result of the manufacturing or synthesis of the polymer. These copolymer are well known in the art as disclosed in U.S. Patent Nos. 4,130,535 and 6,451,915.

The thermoplastic polymer is a solid, generally high molecular weight plastic material, which may be referred to as a thermoplastic resin. Preferably, this resin is a crystalline or a semi-crystalline polymer, and more preferably is a resin that has a crystallinity of at least 25 percent as measured by differential scanning calorimetry. Polymers with a high glass transition temperature are also acceptable as the thermoplastic resin. The melt temperature of these resins should generally be lower than the decomposition temperature of the rubber. Reference to a thermoplastic resin will include a thermoplastic resin or a mixture of two or more thermoplastic resins.

The thermoplastic resins preferably have a weight average molecular weight (M_{w}) from 200,000 to 700,000, and a number average molecular weight (Mₙ) from 80,000 to 200,000. More preferably, these resins have a M_{w} from 300,000 to 600,000, and a Mₙ from 90,000 to 150,000.

The thermoplastic resins generally have a melt temperature (Tₘ) that is from 150 to 175°C, preferably from 155 to 170°C, and even more preferably from 160 to 170°C. The glass transition temperature (T_{g}) of these resins is from -5 to 10°C, preferably from -3 to 5°C, and even more preferably from 0 to 2°C. The crystallization temperature (T_{c}) of these resins is from 95 to 130°C, preferably from 100 to 120°C, and even more preferably from 105 to 115°C as measured by DSC and cooled at 10°C/min.

The thermoplastic resins generally have a melt flow rate that is less than 10 dg/min, preferably less than 2 dg/min, and still more preferably less than 0.8 dg/min. Melt flow rate is a measure of how easily a polymer flows under standard pressure, and is measured by using ASTM D-1238 at 230°C and 2.16 kg load.

Exemplary thermoplastic resins include crystallizable polyolefins, polyimides, polyesters (nylons), poly(phenylene ether), polycarbonates, styreneacrylonitrile copolymers, polyethylene terephthalate, pulyburylene terephthalate, polystyrene, polystyrene derivatives, polyphenylene oxide, polyoxymethylene, and fluorine-containing thermoplastics. The preferred thermoplastic resins are crystallizable polyolefins that are formed by polymerizing α-olefins such as ethylene, propylene, 1-butene, 1-hexene, 1-octene, 2-methyl-1-propene, 3-methyl-1-pentene, 4-methyl-1-pentene, 5-methyl-1-hexene, and mixtures thereof. Copolymers of ethylene and propylene or ethylene or propylene with another α-olefin such as 1-butene, 1-hexene, 1-octene, 2-methyl-1-propene, 3-methyl-1-pentene, 4-methyl-1-pentene, 5-methyl-1-hexene or mixtures thereof is also contemplated. These homopolymers and copolymers may be synthesized by using any polymerization technique known in the art such as, but not limited to, the "Phillips catalyzed reactions," conventional Ziegler-Natta type polymerizations, and metallocene catalysis including, but not limited to, metallocene-alumoxane and metallocene-ionic activator catalysis.

An especially preferred thermoplastic resin is high-crystalline isotactic or syndiotactic polypropylene. This polypropylene generally has a density of from 0.85 to 0.91 g/cm³, with the largely isotactic polypropylene having a density of from 0.90 to 0.91 g/cm³. Also, high and ultra-high molecular weight polypropylene that has a fractional melt flow rate is highly preferred. These polypropylene resins are characterized by a melt flow rate that is less than or equal to 10 dg/min and more preferably less than or equal to 1.0 dg/min per ASTM D-1238.

Any curative that is capable of curing or crosslinking the elastomeric copolymer may be used. Some non-limiting examples of these curatives include phenolic resins, peroxides, maleimides, and silicon-containing curatives.

Any phenolic resin that is capable of crosslinking a rubber polymer can be employed in practicing the present invention. Reference is made to U.S. Patent Nos. 2,972,600 and 3,287,440 in this regard. The preferred phenolic resin curatives can be referred to as resole resins and are made by condensation of alkyl substituted phenols or unsubstituted phenols with aldehydes, preferably formaldehydes, in an alkaline medium or by condensation of bi-functional phenoldialcohols. The alkyl substituents of the alkyl substituted phenols typically contain 1 to 10 carbon atoms. Dimethylol phenols or phenolic resins, substituted in para-positions with alkyl groups containing 1 to 10 carbon atoms are preferred. These phenolic curatives are typically thermosetting resins and may be referred to as phenolic resin curatives or phenolic resins. These phenolic resins are ideally used in conjunction with a catalyst system. For example, non-halogenated phenol curing resins are preferably used in conjunction with halogen donors and, optionally, a hydrogen halide scavenger. Where the phenolic curing resin is halogenated, a halogen donor is not required but the use of a hydrogen halide scavenger, such as ZnO, is preferred. For a further discussion of phenolic resin curing of thermoplastic vulcanizates, reference can be made to U.S. Patent No. 4,311,628.

An example of a preferred phenolic resin curative is defined according to the general formula (I). 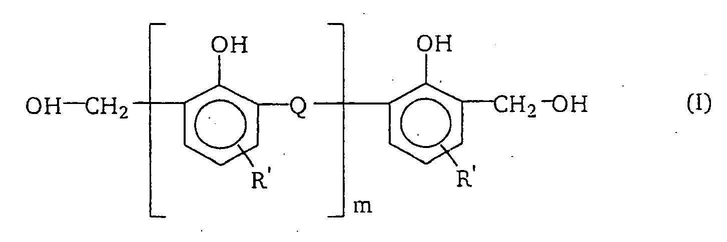 where Q is a divalent radical selected from the group consisting of -CH₂-, -CH₂-O-CH₂-; m is zero or a positive integer from 1 to 20 and R' is an organic radical. Preferably, Q is the divalent radical -CH₂-O-CH₂-, m is zero or a positive integer from 1 to 10, and R' is an organic radical having less than 20 carbon atoms. Still more preferably m is zero or a positive integer from 1 to 5 and R' is an organic radical having between 4 and 12 carbon atoms.

Peroxide curatives are generally selected from organic peroxides. Examples of organic peroxides include, but are not limited to, di-tert-butyl peroxide, dicumyl peroxide, t-butylcumyl peroxide, α,α-bis(tert-butylperoxy) diisopropyl benzene, 2,5 dimethyl 2,5-di(t-butylperoxy)hexane, 1,1-di(t-butylperoxy)-3,3,5-trimethyl cyclohexane, benzoyl peroxide, lauroyl peroxide, dilauroyl peroxide, 2,5-dimethyl-2,5-di(tert-butylperoxy) hexene-3, and mixtures thereof. Also, diaryl peroxides, ketone peroxides, peroxydicarbonates, peroxyesters, dialkyl peroxides, hydroperoxides, peroxyketals and mixtures thereof may be used. Coagents such as triallylcyanurate are typically employed in combination with these peroxides. For a further discussion of peroxide curatives and their use for preparing thermoplastic vulcanizates, reference can be made to U.S. Patent No. 5,656,693. When peroxide curatives are employed, the elastomeric copolymer will preferably include 5-vinyl-2-norbornene and 5-ethylidene-2-norbornene as the diene component.

Useful silicon-containing curatives generally include silicon hydride compounds having at least two SiH groups. These compounds react with carbon-carbon double bonds of unsaturated polymers in the presence of a hydrosilation catalyst. Silicon hydride compounds that are useful in practicing the present invention include, but are not limited to, methylhydrogen polysiloxanes, methylhydrogen dimethyl-siloxane copolymers, alkyl methyl polysiloxanes, bis(dimethylsilyl)alkanes, bis (dimethylsilyl) benzene, and mixtures thereof.

Preferred silicon hydride compounds may be defined by the formula 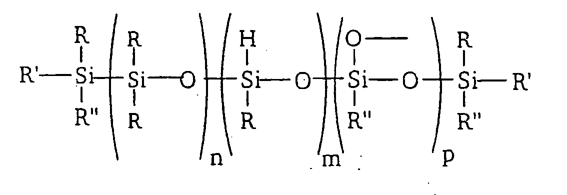 where each R is independently selected from alkyls containing 1 to 20 carbon atoms, cycloalkyls containing 4 to 12 carbon atoms, and aryls, m is an integer having a value ranging from 1 to 50, n is ah integer having a value ranging from 1 to 50, and p is an integer having a value ranging from 0 to 6.

As noted above, hydrosilation curing of the elastomeric polymer is preferably conducted in the presence of a catalyst. These catalysts can include, but are not limited to, peroxide catalysts and catalysts including transition metals of Group VIII. These metals include, but are not limited to, palladium, rhodium, and platinum, as well as complexes of these metals. For a further discussion of the use of hydrosilation to cure thermoplastic vulcanizates, reference can be made to U.S. Patent Nos. 5,936,028, 6,251,998, and 6,150,464. When silicon-containing curatives are employed, the elastomeric copolymer employed will preferably include 5-vinyl-2-norbornene as the diene component.

Another useful cure system is disclosed in U.S. Patent No. 6,277,916 B1. These cure systems employ polyfunctional compounds such as poly(sulfonyl azide)s.

Plasticizers, extender oils, synthetic processing oils, or a combination thereof may be employed in the compositions of the present invention. The extender oils may include, but are not limited to, aromatic, naphthenic, and paraffinic extender oils. Exemplary synthetic processing oils are polylinear α-olefins, polybranched α-olefins, and hydrogenated polyalphaolefins. The compositions of this invention may include organic esters, alkyl ethers, or combinations thereof. Reference is made to U.S. Patent No. 5,290,886 and 5,397,832 in this regard. The addition of certain low to medium molecular weight organic esters and alkyl ether esters to the compositions of the invention dramatically lowers the Tg of the polyolefin and rubber components, and of the overall composition, and improves the low temperatures properties, particularly flexibility and strength. These organic esters and alkyl ether esters generally have a molecular weight that is generally less than 10,000. It is believed that the improved effects are achieved by the partitioning of the ester into both the polyolefin and rubber components of the compositions. Particularly suitable esters include monomeric and oligomeric materials having an average molecular weight below 2000, and preferably below 600. The ester should be compatible, or miscible, with both the polyolefin and rubber components of the composition; *i*.*e*. that it mix with the other components to form a single phase. The esters found to be most suitable were either aliphatic mono- or diesters or alternatively oligomeric aliphatic esters or alkyl ether esters. Polymeric aliphatic esters and aromatic esters were found to be significantly less effective, and phosphate esters were for the most part ineffective.

In certain embodiments of this invention, the thermoplastic vulcanizate may likewise include a polymeric processing additive. The processing additive employed is a polymeric resin that has a very high melt flow index. These polymeric resins include both linear and branched molecules that have a melt flow rate that is greater than 500 dg/min, more preferably greater than 750 dg/min, even more preferably greater than 1000 dg/min, still more preferably greater than 1200 dg/min, and still more preferably greater than 1500 dg/min. Melt flow rate is a measure of how easily a polymer flows under standard pressure, and is measured by using ASTM D-1238 at 230°C and 2.16 kg load. The thermoplastic elastomers of the present invention may include mixtures of various branched or various linear polymeric processing additives, as well as mixtures of both linear and branched polymeric processing additives. Reference to polymeric processing additives will include both linear and branched additives unless otherwise specified. The preferred linear polymeric processing additives are polypropylene homopolymers. The preferred branched polymeric processing additives include diene-modified polypropylene polymers. Thermoplastic vulcanizates that include similar processing additives are disclosed in U.S. Patent No. 6,451,915.

In addition to the thermoplastic resin, the thermoplastic elastomer, curatives and optional extender oils, the composition may also include reinforcing and non-reinforcing fillers, antioxidants, stabilizers, rubber processing oil, lubricants, antiblocking agents, anti-static agents, waxes, foaming agents, pigments, flame retardants and other processing aids known in the rubber compounding art. These additives can comprise up to 50 weight percent of the total composition. Fillers and extenders that can be utilized include conventional inorganics such as calcium carbonate, clays, silica, talc, titanium dioxide, carbon black, as well as organic and inorganic nanoscopic fillers. Fillers, such as carbon black, are preferably added in combination with a carrier such as polypropylene. This invention advantageously provides the ability to add filler, such as carbon black, together with the rubber as well as together with a thermoplastic carrier such as polypropylene in a single-pass or one-step process.

Preferably, compositions of this invention will contain a sufficient amount of the elastomeric copolymer to form rubbery compositions of matter. The skilled artisan will understand that rubbery compositions of matter are those that have ultimate elongations greater than 100 percent, and that quickly retract to 150 percent or less of their original length within 10 minutes after being stretched to 200 percent of their original length and held at 200 percent of their original length for 10 minutes.

Accordingly, the thermoplastic elastomers of the present invention should comprise at least 25 percent by weight elastomeric copolymer, preferably at least 35 percent by weight elastomeric copolymer, even more preferably at least 45 percent by weight elastomeric copolymer, and still more preferably at least 50 percent by weight elastomeric copolymer. More specifically, the amount of elastomeric copolymer within the thermoplastic vulcanizate is generally from 25 to 90 percent by weight, preferably from 45 to 85 percent by weight, and more preferably from 60 to 80 percent by weight, based on the entire weight of the thermoplastic vulcanizate.

In one embodiment, the elastomeric copolymer component of the thermoplastic elastomers will consist entirely of the gas-phase elastomeric copolymers. In other embodiments, the elastomeric copolymer component will include both gas-phase elastomeric copolymers as well as conventional elastomeric copolymers (e.g., solution-polymerized elastomeric copolymer or slurry-polymerized elastomeric copolymer). In these latter embodiments, the elastomeric copolymer component may include from 10 to 90 parts by weight of the gas-phase elastomeric copolymer and from 90 to 10 parts by weight of a conventional elastomeric copolymer, preferably from 20 to 80 parts by weight gas-phase elastomeric copolymer and from 80 to 20 parts by weight conventional elastomeric copolymer, more preferably from 30 to 70 parts by weight gas-phase elastomeric copolymer and from 70 to 30 parts by weight conventional elastomeric copolymer, even more preferably from 40 to 60 parts by weight gas-phase elastomeric copolymer and from 60 to 40 parts by weight conventional elastomeric copolymer, and still more preferably 50 parts by weight gas-phase elastomeric copolymer and 50 parts by weight conventional elastomeric copolymer, based on the entire weight of the,elastomeric copolymer (or rubber component).

The thermoplastic elastomers should generally comprise from 10 to 80 percent by weight of the thermoplastic resin based on the total weight of the rubber and thermoplastic resin combined. Preferably, the thermoplastic elastomers comprise from 15 to 80 percent by weight, more preferably from 20 to 40 percent by weight, and even more preferably from 25 to 35 percent by weight of the thermoplastic resin based on the total weight of the rubber and thermoplastic resin combined.

Where a phenolic resin curative is employed, a vulcanizing amount curative preferably comprises from 1 to 20 parts by weight, more preferably from 3 to 16 parts by weight, and even more preferably from 4 to 12 parts by weight, phenolic resin per 100 parts by weight rubber.

The skilled artisan will be able to readily determine a sufficient or effective amount of vulcanizing agent to be employed without undue calculation or experimentation. The amount of vulcanizing agent should be sufficient to at least partially vulcanize the elastomeric polymer. Preferably, the elastomeric polymer is completely vulcanized.

Where a peroxide curative is employed, a vulcanizing amount of curative preferably comprises from 1x10⁻⁴ moles to 4x10⁻² moles, more preferably from 2x10⁻⁴ moles to 3x10⁻² moles, and even more preferably from 7x10⁻⁴ moles to 2x10⁻² moles per 100 parts by weight rubber.

Where silicon-containing curative is employed, a vulcanizing amount of curative preferably comprises from 0.1 to 10 mole equivalents, and preferably from 0.5 to 5 mole equivalents, of SiH per carbon-carbon double bond.

Generally, from 5 to 300 parts by weight, preferably from 30 to 250 parts by weight, and more preferably from 70 to 200 parts by weight, of extender oil per 100 parts rubber is added. The quantity of extender oil added depends upon the properties desired, with the upper limit depending upon the compatibility of the particular oil and blend ingredients; this limit is exceeded when excessive exuding of extender oil occurs. The amount of ester plasticizer in the composition will generally be less than 250 parts, and preferably less than 175 parts, per 100 parts rubber.

When employed, the thermoplastic elastomers should generally comprise from 1 to 25 percent by weight of the polymeric processing additive based on the total weight of the rubber and thermoplastic resin combined. Preferably, the thermoplastic elastomers comprise from 1.5 to 20 percent by weight, and more preferably from 2 to 15 percent by weight of the polymeric processing additive based on the total weight of the rubber and thermoplastic resin combined.

Fillers, such as carbon black or clay, may be added in amount from 10 to 250, per 100 parts by weight of rubber. The amount of carbon black that can be used depends, at least in part, upon the type of carbon black and the amount of extender oil that is used. The amount of extender oil depends, at least in part, upon the type of rubber. High viscosity rubbers are more highly oil extendable.

The rubber is crosslinked by dynamic vulcanization. The term dynamic vulcanization refers to a vulcanization or curing process for a rubber contained in a thermoplastic elastomer composition, wherein the rubber is vulcanized under conditions of high shear at a temperature above the melting point of the polyolefin component. The rubber is thus simultaneously crosslinked and dispersed as fine particles within the polyolefin matrix, although other morphologies may also exist. Dynamic vulcanization is effected by mixing the thermoplastic elastomer components at elevated temperature in conventional mixing equipment such as roll mills, Banbury mixers, Brabender mixers, continuous mixers, mixing extruders and the like. One method for preparing thermoplastic vulcanizates is described in U.S. Patent No. 4,594,390, although methods employing low shear rates can also be used.

Those ordinarily skilled in the art will appreciate the appropriate quantities, types of cure systems, and vulcanization conditions required to carry out the vulcanization of the rubber. The rubber can be vulcanized by using varying amounts of curative, varying temperatures, and a varying time of cure in order to obtain the optimum crosslinking desired. Because the conventional elastomeric copolymers are not granular and do not include inert material as part of the manufacturing or synthesis of the polymer, additional process steps must be included to granulate or add inert material, if desired, to the conventional elastomeric copolymer. On the other hand, gas-phase elastomeric copolymers are granular and include particulate material, such as carbon black, and therefore the manufacture of thermoplastic vulcanizates from these elastomeric copolymers does not require, *i*.*e*., can be devoid of an elastomeric copolymer granulation step or a step of pre-dispersing inert material, such as carbon black, into the elastomeric copolymer.

Despite the fact that the rubber component is partially or fully cured, the compositions of this invention can be processed and reprocessed by conventional plastic processing techniques such as extrusion, injection molding, and compression molding. The rubber within these thermoplastic elastomers is usually in the form of finely-divided and well-dispersed particles of vulcanized or cured rubber, although a co-continuous morphology or a phase inversion is also possible.

The thermoplastic elastomer of this invention are useful for making a variety of articles such as weather seals, hoses, belts, gaskets, moldings, boots, elastic fibers and like articles. They are particularly useful for making articles by blow molding, extrusion, injection molding, thermo-forming, elasto-welding and compression molding techniques. More specifically, they are useful for making vehicle parts such as weather seals, brake parts such as cups, coupling disks, and diaphragm cups, boots such as constant velocity joints and rack and pinion joints, tubing, sealing gaskets, parts of hydraulically or pneumatically operated apparatus, o-rings, pistons, valves, valve seats, valve guides, and other elastomeric polymer based parts or elastomeric polymers combined with other materials such as metal/plastic combination materials. Also contemplated are transmission belts including V-belts, toothed belts with truncated ribs containing fabric faced V's, ground short fiber reinforced V's or molded gum with short fiber flocked V's.

In order to demonstrate the practice of the present invention, the following examples 4 to 7, 15 to 18, and 22 to 24 as well as comparative examples 1 to 3, 8 to 14, and 19 to 21 have been prepared and tested. The examples should not, however, be viewed as limiting the scope of the invention. The claims will serve to define the invention.

### GENERAL EXPERIMENTATION

### Samples 1-8

Thermoplastic vulcanizates were prepared by employing either solution-synthesized EPDM or gas-phase polymerized EPDM. Table I provides the characteristics of the various EPDMs.

**TABLE I**

| | **EPDM I*** | **EPDM II*** | **EPDM III** | **EPDM IV** |
|---|---|---|---|---|
| Synthesis Method | solution | solution | gas-phase | gas-phase |
| Catalyst | vanadium-based | vanadium-based | metallocene | vanadium |
| Mooney (ML₁₊₄@125°C) | 50 | 91 | 80 | 84 |
| Ethylene Weight % | 64 | 55.5 | 68 | 64.2 |
| Propylene Weight % | 32.1 | 38.8 | 28 | 32.3 |
| 5-ethylidene-2-norbornene Weight % | 3.9 | 5.7 | 4.0 | 3.5 |
| Molecular Weight (GPC) | - | - | - | - |
| Mₙ | 150,000 | 81,900 | - | - |
| M_{w} | 450,000 | 288,000 | ------ | ------ |
| Oil (parts/100 parts rubber) | 75 | 0 | 0 | 0 |
| Carbon Black (parts/100 parts rubber) | 0 | 0 | 18-30 | 18-30 |

| | | | | |
|---|---|---|---|---|
| * not according to the invention | | | | |

The thermoplastic vulcanizates were prepared by using large-scale high shear mixers and the method as set forth in U.S. Patent No. 4,594,390. The ingredients used in each thermoplastic vulcanizate are disclosed in Table II together with physical testing that was performed on Samples that were molded at 190°C. In addition to the ingredients set forth in Table II, each thermoplastic vulcanizate included 42.78 parts by weight clay per 100 parts by weight rubber, 3.4 parts by weight wax per 100 parts by weight rubber, 1.94 parts by weight zinc oxide per 100 parts by weight rubber, 1.26 parts by weight stannous chloride per 100 parts by weight rubber, and 4.4 parts by weight phenolic resin per 100 parts by weight rubber.

| **TABLE II** | | | | | | | | |
|---|---|---|---|---|---|---|---|---|
| | **1** * | **2** * | **3** * | **4** | **5** | **6** | **7** | **8** * |
| EPDM I | 175 | 175 | 175 | - | - | - | - | - |
| EPDM II | - | - | - | - | - | - | - | 100 |
| EPDM III | - | - | - | 118 | 118 | 118 | 118 | - |
| Polypropylene I | 36.9 | - | - | 36.6 | 36.6 | 30.6 | - | 36.6 |
| Polypropylene II | - | - | - | 6.7 | 6.7 | 6.7 | 6.7 | - |
| Polypropylene III | - | - | - | - | - | 6 | 6 | - |
| Polypropylene IV | - | 36.9 | - | - | - | - | - | - |
| Polypropylene V | - | - | 36.9 | - | - | - | 30.6 | - |
| Carbon Black (40% active) | 24.4 | 24.4 | 24.4 | - | - | - | - | - |
| Processing Oil | 59.9 | 59.9 | 59.9 | 134.9 | 134.9 | 134.9 | 134.9 | 134.9 |
| Moisture (%). | 0.043 | 0.06 | 0.04 | 0.071 | 0.034 | 0.036 | 0.066 | 0.037 |
| Hardness (Shore A) | 69.4 | 67.8 | 67.3 | 62.5 | 61.7 | 62.1 | 62.2 | 65.1 |
| Specific Cravity | 0.99 | 0.958 | 1.009 | 0.998 | 0.986 | 0.998 | 0.998 | 0.961 |
| Ultimate Tensile Strength (MPa) | 7.05 | 6.61 | 6.91 | 5.26 | 5.34 | 4.80 | 5.12 | 5.10 |
| Ultimate Elongation (%) | 450 | 448 | 424 | 341 | 357 | 335 | 343 | 299 |
| M 100 (MPa) | 2.63 | 2.36 | 2.78 | 2.16 | 2.01 | 1.99 | 1.99 | 2.32 |
| Weight Gain (%) | 79 | 84 | 87 | 87 | 88 | 88 | 83 | 82 |
| LCR (Pa.s @ 1200 s⁻¹ @ 204°C) | 85.1 | 89.7 | 92.2 | 86.6 | 83.9 | 82.7 | 88.9 | 85.2 |
| ESR | 70 | 90 | 70 | 88 | 89 | 106 | 89 | 122 |
| Tension Set (%) | 10 | 8 | 10 | 9.5 | 9.5 | 9.5 | 9.5 | 15 |
| Spot Count | 84 | > 100 | > 100 | 51 | 10 | 12 | 6 | > 100 |
| UV @ 2,500 kJ (ΔE) | 0.93 | 0.96 | - | 1.12 | 1.08 | 1.03 | - | - |

| | | | | | | | | |
|---|---|---|---|---|---|---|---|---|
| * not according to the invention | | | | | | | | |

The clay employed was obtained under the tradename ICECAP K (Burgess), the carbon black was obtained under the tradename AMPACET 49974 (which contains about 40% by weight carbon black and about 60% by weight polypropylene as a carrier), the processing oil was obtained under the tradename SUNPAR 150M, the wax was obtained under the tradename OKERIN ^{™} wax, and the phenolic resin was obtained under the tradename SP1045 (Schenectady Int., Schenectady, New York). Polypropylene I was obtained under the tradename D008M (Aristech), which has an MFR of about 0.8 dg/min, Polypropylene II was obtained under the tradename FP230 (Aristech), which has an MFR of about 30 dg/min, Polypropylene III was obtained under the tradename 3746G (Exxon), which has an MFR of about 1,200 dg/min, Polypropylene IV was obtained under the tradename 51S07A (Equistar), which has an MFR of about 0.7 dg/min, and Polypropylene V was obtained under the tradename TR 477 (Equistar), which has an MFR of about 0.5 dg/min.

### Samples 9-18

In a similar fashion to Samples 1-8, additional thermoplastic vulcanizates were prepared by using both solution-polymerized or synthesized and gas-phase synthesized EPDM. Distinguishing ingredients and the results of the physical testing of each thermoplastic vulcanizate is set forth in Table III.

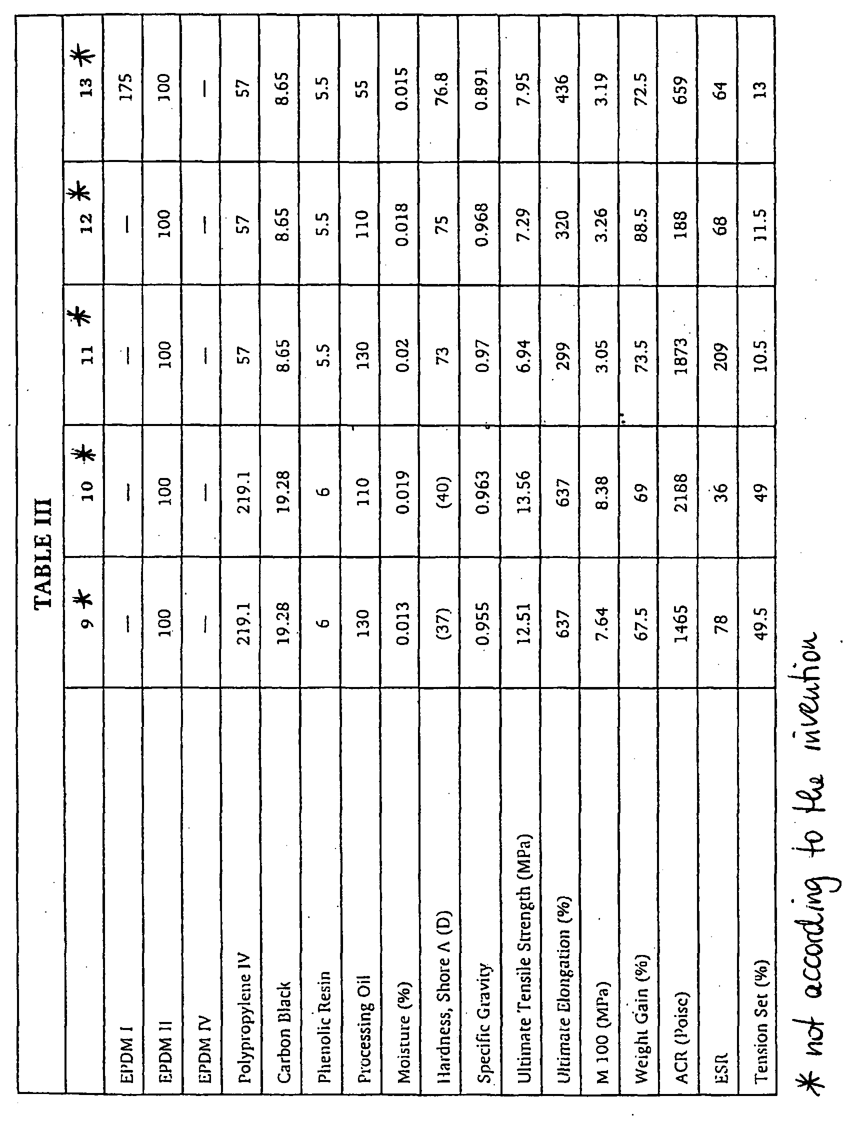

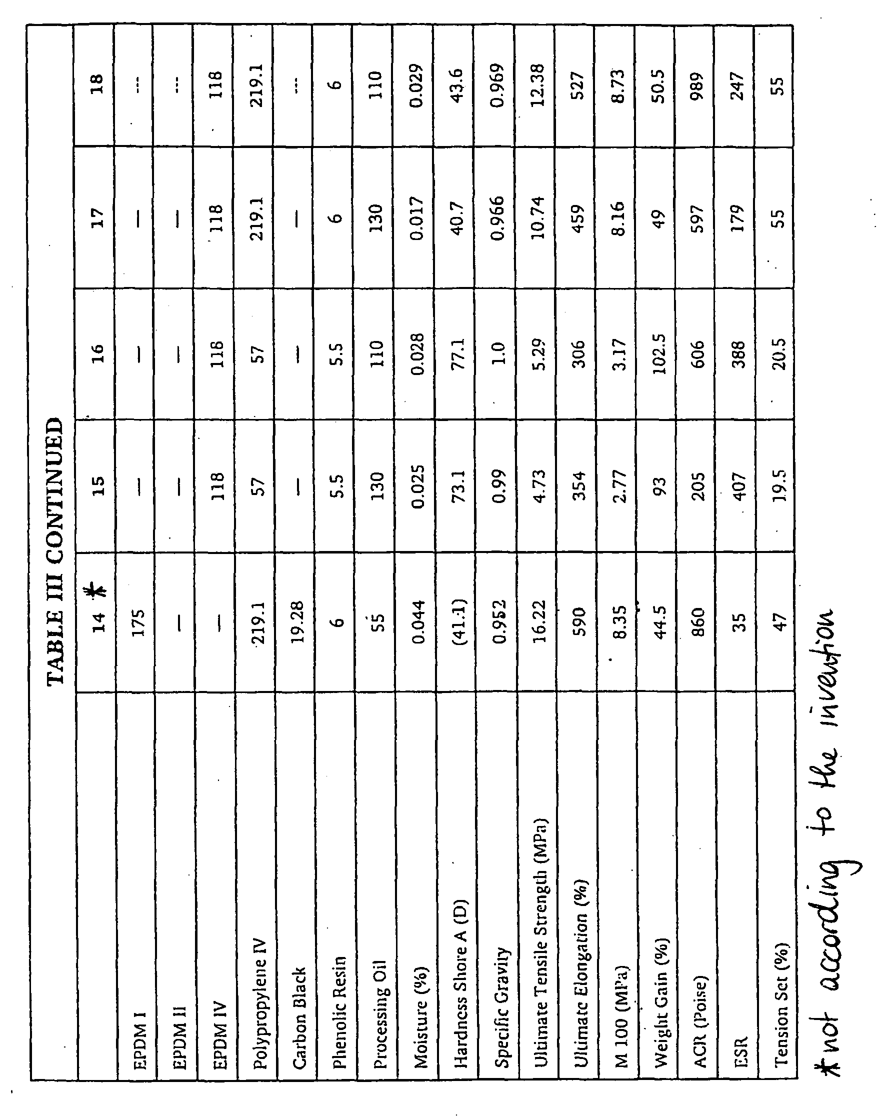

### Samples 19-20

In a similar fashion to Samples 1-18, a thermoplastic vulcanizate was prepared by using solution-polymerized EPDM and comparing this thermoplastic vulcanizate to a thermoplastic vulcanizate prepared by using a blend of solution-polymerized EPDM and gas-phase synthesized EPDM. Distinguishing ingredients and results of the analytical testing of the thermoplastic vulcanizates is set forth in Table IV.

**TABLE IV**

| | **19** * | **20** * |
|---|---|---|
| EPDM I | 175 | 87.5 |
| EPDM III | - | 59 |
| Polypropylene I | 36.9 | 36.9 |
| Polypropylene II | - | 14.4 |
| Carbon Black | 24.4 | 0 |
| Processing Oil | 59.9 | 97.4 |
| Moisture (%) | 0.028 | 0.038 |
| Hardness (Shore A) | 70.1 | 68 |
| Specific Gravity | 0.991 | 0.964 |
| Ultimate Tensile Strength (MPa) | 7.39 | 6.47 |
| Ultimate Elongation (%) | 441 | 380 |
| M 100 (MPa) | 2.68 | 2.66 |
| Weight Gain (%) | 79 | 78.5 |
| LCR (Pa.s @ 1200 s⁻¹ @ 204°C) | 92.7 | 82.4 |
| ESR | 77 | 75 |
| Tension Set (%) | 11.5 | 10.5 |
| UV @ 2,500 kJ (ΔE) | 0.86 | 0.80 |

| | | |
|---|---|---|
| * not according to the invention | | |

### Samples 21-24

Four additional thermoplastic vulcanizates were prepared in a similar fashion to the previous samples except that the thermoplastic vulcanizates were dynamically cured by employing a peroxide cure system at lower rates. In addition to the ingredients set forth in Table V, each thermoplastic vulcanizate included 42 parts by weight clay per 100 parts by weight rubber.

**TABLE V**

| Samples | **21** * | **22** | **23** | **24** |
|---|---|---|---|---|
| EPDM I | 175 | --- | --- | --- |
| EPDM III | --- | 120 | 120 | 120 |
| Polypropylene IV | 60 | 60 | 60 | 60 |
| Peroxide (50% active) | 6.60 | 3.30 | 6.60 | 9.00 |
| Coagent (50% active | 6.60 | 6.60 | 6.60 | 9.00 |
| Processing Oil | 55 | 55 | 55 | 55 |
| Hardness (Shore A) | 67 | 70 | 73 | 74 |
| Specific Gravity | 0.966 | 1.005 | 1.007 | 1.000 |
| Ultimate Tensile Strength (MPa) | 5.86 | 6.57 | 8.12 | 6.04 |
| Ultimate Elongation (%) | 304 | 248 | 224 | 179 |
| M 100 (MPa) | 3.09 | 4.17 | 5.03 | 4.43 |
| Weight Gain (%) | 91 | 114 | 82 | 92 |
| Tension Set (%) | 9.0 | 13.5 | 11.0 | 11.0 |

| | | | | |
|---|---|---|---|---|
| * not according to the invention | | | | |

The peroxide was a 2,5-di(t-butylperoxy)hexane and the coagent was triallylisocyanurate.

The analytical procedures employed to perform physical testing on each thermoplastic vulcanizate sample included the following.

The surface spot count provides a quantitative measurement of the surface spots of an extruded elastomeric strip through the use of a visual inspection standard. In performing the test, a 2.54 cm or 3.81cm 1 inch or 1½ inch diameter extruder equipped with a 24:1 length/diameter screw having a 3-3.5 compression ratio was used. The extruder is fitted with a strip die that is 25.4 mm wide x 0.5 mm thick x 7-10 mm land length. A breaker plate is used with the die, but no screen pack is placed in front of the breaker plate. In preparing the extrudate, a temperature profile is employed to give a melt temperature of 200°C +/- 3°C. A hand-held temperature probe should be used to establish the melt temperature. With the extruder having three temperature zones within the feed zone, zone 1 should be set to 180°C, zone 2 should be set to 190°C, and zone 3 should be set to 200°C. The fourth zone, which is the die zone, should be set to 205°C. These temperatures should be controlled to +/- 6°C. When the zone temperatures have reached their set points, the screw should be started and about 1 kg of the sample should be loaded into the feed hopper. The extruder screw speed should be set to maintain an output of approximately 50 g +/- 5 g per minute. The material should be allowed to flush through the extruder for at least five minutes before collecting any sample.

Extrusion surface roughness (ESR) was measured as described in Chemical Surace Treatments of Natural Rubber And EPDM Thermoplastic Elastomers: Effects on Friction and Adhesion, RUBBER CHEMISTRY AND TECHNOLOGY, Vol. 67, No. 4 (1994). The rating for each sample was determined by using a stylus profilometer.

Shore A and D hardness were determined pursuant to ASTM D-2240-91 at 23°C by using a durometer. Ultimate tensile strength, ultimate elongation, and 100 percent modulus were determined according to ASTM D-412-92 at 23°C by using an Instron Testing Machine. Weight gain was determined according to ASTM D-471 after 24 hours at 125°C. Tension set was determined according to ASTM D-142.

LCR capillary viscosity was determined by using a Dynisco analyzer and their recommended procedure. ΔE was determined according to SAE J1960 (June 1989), which is the accelerated exposure of automotive exterior materials test using a controlled irradiance water-cooled xenon arc apparatus.

While the best mode and preferred embodiment of the invention have been set forth in accord with the Patent Statues, the scope of this invention is not limited thereto, but rather is defined by the attached claims. Thus, the scope of the invention includes all modifications and variations that may fall within the scope of the claims.

A thermoplastic elastomer composition comprising: a blend of a vulcanized elastomeric copolymer and a thermoplastic polymer, where said vulcanized elastomeric copolymer derives from the vulcanization of an elastomeric copolymer that was synthesized by using gas-phase polymerization techniques, and where the vulcanized elastomeric copolymer and the thermoplastic polymer have carbon black dispersed therein.

## Claims

1. A thermoplastic elastomer composition comprising:
a blend of a vulcanized elastomeric copolymer and a thermoplastic polymer, where said vulcanized elastomeric copolymer has been obtained by dynamic vulcanization of a gas-phase elastomeric copolymer having a Mooney Viscosity (ML(1+4@ 125°C)) of 80 to 450, and where the vulcanized elastomeric copolymer and the thermoplastic polymer have carbon black dispersed therein.

2. The composition of claim 1, where the elastomeric copolymer includes from 10 to 40 parts by weight carbon black per 100 parts by weight of rubber.

3. The composition of claim 1, where said blend includes blending from 25 to 90 percent by weight elastomeric copolymer and 10 to 80 percent thermoplastic polymer, based on the total weight of the elastomeric copolymer and thermoplastic polymer combined.

4. The composition of claim 1, where the blend of the elastomeric copolymer and the thermoplastic polymer further includes a solution-polymerized or slurry-polymerized elastomeric copolymer.

5. The composition of claim 4, where the gas-phase elastomeric copolymer and solution-polymerized or slurry-polymerized elastomeric copolymer form an elastomeric copolymer component that includes from 10 to 90 parts by weight of the gas-phase elastomeric copolymer and from 90 to 10 parts by weight of the solution-polymerized elastomeric copolymer.

6. The composition of claim 1, where the elastomeric copolymer has a weight average molecular weight that is greater than 200,000 and a number average molecular weight that is greater than 80,000, and where the gas-phase elastomeric copolymer is non-oil extended.

7. The composition of claim 1, where said step of dynamically vulcanizing the gas-phase elastomeric copolymer is achieved with a phenolic cure system or a peroxide cure system.

8. The composition of claim 1, where the thermoplastic polymer is polypropylene.

9. Use of an elastomeric copolymer which contains from 10 to 40 parts carbon black per 100 parts rubber, which has a Mooney Viscosity (ML(1+4@ 125°C)) of 80 to 450 and which is obtained by gas-phase polymerization for improving the UV stability, extrusion surface roughness (ESR) and surface spot count of a thermoplastic vulcanizate composition.

10. The use of claim 9, where the gas-phase elastomeric copolymer has a weight average molecular weight (M_{w}) of greater than 200,000.

## Patentansprüche

1. Thermoplastische Elastomerzusammensetzung, umfassend:
ein Gemisch aus einem vulkanisierten elastomeren Copolymer und einem thermoplastischen Polymer, wobei das vulkanisierte elastomere Copolymer durch dynamische Vulkanisation eines in Gasphase entstandenen elastomeren Copolymers mit einer Mooney-Viskosität (ML(1+4 bei 125°C)) von 80 bis 450 erhalten ist und wobei in dem vulkanisierten elastomeren Copolymer und dem thermoplastischen Polymer Ruß dispergiert ist.

2. Zusammensetzung gemäß Anspruch 1, wobei das elastomere Copolymer 10 bis 40 Gewichtsteile Ruß auf 100 Gewichtsteile Kautschuk enthält.

3. Zusammensetzung gemäß Anspruch 1, wobei das Gemisch aus 25 bis 90 Gew.-% elastomerem Copolymer und 10 bis 80 Gew.-% thermoplastischem Polymer gemischt ist, bezogen auf das Gesamtgewicht des elastomeren Copolymers und des thermoplastischen Polymers.

4. Zusammensetzung gemäß Anspruch 1, wobei das Gemisch aus dem elastomeren Copolymer und dem thermoplastischen Polymer weiterhin ein lösungspolymerisiertes oder suspensionspolymerisiertes elastomeres Copolymer umfasst.

5. Zusammensetzung gemäß Anspruch 4, wobei das in Gasphase entstandene elastomere Copolymer und das lösungspolymerisierte oder suspensionspolymerisierte elastomere Copolymer eine elastomere Copolymerkomponente bilden, die 10 bis 90 Gewichtsteile des in Gasphase entstandenen elastomeren Copolymers und 90 bis 10 Gewichtsteile des lösungspolymerisierten elastomeren Copolymers umfasst.

6. Zusammensetzung gemäß Anspruch 1, wobei das elastomere Copolymer ein Gewichtsmittel des Molekulargewichts von über 200 000 und ein Zahlenmittel des Molekulargewichts von über 80 000 hat und wobei das in Gasphase entstandene elastomere Copolymer nicht mit Öl gestreckt ist.

7. Zusammensetzung gemäß Anspruch 1, wobei der Schritt des dynamischen Vulkanisierens des in Gasphase entstandenen elastomeren Copolymers mit einem phenolischen Vulkanisationssystem oder einem Peroxid-Vulkanisationssystem erreicht wird.

8. Zusammensetzung gemäß Anspruch 1, wobei es sich bei dem thermoplastischen Polymer um Polypropylen handelt.

9. Verwendung eines elastomeren Copolymers, das 10 bis 40 Gewichtsteile Ruß auf 100 Gewichtsteile Kautschuk enthält und eine Mooney-Viskosität (ML(1+4 bei 125°C)) von 80 bis 450 hat und das durch Gasphasenpolymerisation erhalten wurde, zur Verbesserung der UV-Stabilität, der Extrusionsoberflächenrauigkeit (ESR) und der Oberflächenfleckenzahl einer thermoplastischen Vulkanisatzusammensetzung.

10. Verwendung gemäß Anspruch 9, wobei das in Gasphase entstandene elastomere Copolymer ein Gewichtsmittel des Molekulargewichts (M_{w}) von über 200 000 hat.

## Revendications

1. Composition d'élastomère thermoplastique, comprenant :
un mélange d'un copolymère élastomère vulcanisé et d'un polymère thermoplastique, ledit copolymère élastomère vulcanisé ayant été obtenu par vulcanisation dynamique d'un copolymère élastomère produit en phase gazeuse ayant une viscosité Mooney (ML(1+4) à 125°C) de 80 à 450, et le copolymère élastomère vulcanisé et le polymère thermoplastique renfermant du noir de carbone à l'état dispersé.

2. Composition suivant la revendication 1, dans laquelle le copolymère élastomère comprend 10 à 40 parties en poids de noir de carbone pour 100 parties en poids de caoutchouc.

3. Composition suivant la revendication 1, dans laquelle ledit mélange comprend le mélange de 25 à 90 % en poids de copolymère élastomère et 10 à 80 % en polymère thermoplastique, sur la base du poids total du copolymère élastomère et du polymère thermoplastique combinés.

4. Composition suivant la revendication 1, dans laquelle le mélange du copolymère élastomère et du polymère thermoplastique comprend en outre un copolymère élastomère polymérisé en solution ou polymérisé en suspension.

5. Composition suivant la revendication 4, dans laquelle le copolymère élastomère produit en phase gazeuse et le copolymère élastomère polymérisé en solution ou polymérisé en suspension forment un constituant copolymère élastomère qui comprend 10 à 90 parties en poids du copolymère élastomère produit en phase gazeuse et 90 à 10 parties en poids du copolymère élastomère polymérisé en solution.

6. Composition suivant la revendication 1, dans laquelle le copolymère élastomère a une moyenne en poids du poids moléculaire qui est supérieure à 200 000 et une moyenne en nombre du poids moléculaire qui est supérieure à 80 000, et dans laquelle le copolymère élastomère produit en phase gazeuse est non étendu à l'huile.

7. Composition suivant la revendication 1, dans laquelle ladite étape de vulcanisation dynamique du copolymère élastomère produit en phase gazeuse est mise en oeuvre avec un système de durcisseur phénolique ou un système de durcisseur à base de peroxyde.

8. Composition suivant la revendication 1, dans laquelle le polymère thermoplastique est le polypropylène.

9. Utilisation d'un copolymère élastomère qui contient 10 à 40 parties de noir de carbone pour 100 parties de caoutchouc, qui a une viscosité Mooney (ML(1+4) à 125°C) de 80 à 450 et qui est obtenu par polymérisation en phase gazeuse, pour améliorer la stabilité au rayonnement UV, la rugosité de surface par extrusion (ESR) et le nombre de taches en surface d'une composition de vulcanisat thermoplastique.

10. Utilisation suivant la revendication 9, dans laquelle le copolymère élastomère produit en phase gazeuse a une moyenne en poids du poids moléculaire (M_{w}) supérieure à 200 000.
